# EUROPÄISCHE PATENTANMELDUNG

(11) **EP 2 829 529 A1**
(43) Veröffentlichungstag der Anmeldung: **28.01.2015**
(21) Anmeldenummer: 13177434.1
(22) Anmeldetag: 22.07.2013
(51) Int. Cl.: C05B 13/00, C05F 7/00, C05D 9/00

(54) **Verwendung eines Granulats aus einer Feststoffvergasung**

(71) Anmelder: KOPF SynGas GmbH & Co. KG, 72172 Sulz-Bergfelden (DE)
(72) Erfinder: Michael, Gaiffi, 72160 Horb (DE)
(74) Vertreter: Späth, Dieter

(57) **Zusammenfassung**

Die Erfindung schlägt die Verwendung eines Granulats, das als Rückstand bei einer Klärschlammvergasung anfällt, als Düngemittel vor.

## Beschreibung

Die Erfindung betrifft die Verwendung eines teilchenförmigen Feststoffs, der bei einer Feststoffvergasung, insbesondere bei einer Vergasung von Klärschlamm, anfällt. Durch Vergasung von Feststoffen, die insbesondere Kohlenstoffe oder auch andere brennbare Bestandteile enthalten, lässt sich ein brennbares Gas gewinnen, das auch als Synthesegas bezeichnet wird. Bei der Vergasung fällt ein thermisch nicht verwertbarer Feststoff an, der auch als Rückstand oder Asche bezeichnet werden kann und entsorgt werden muss. Der Feststoff fällt in Form von Teilchen mit unterschiedlichen Teilchengrößen an und kann als Schüttgut, Granulat oder Pulver bezeichnet werden. In Form kleiner Teilchen kann der Feststoff in dem einen Vergaser verlassenden Synthesegas enthalten sein und mit beispielsweise einem Zyklon-Abscheider vom Gas abgetrennt werden. Feststoff, der aufgrund seiner Teilchengröße einen Vergaser nicht mit dem Synthesegas verlässt, kann durch Schwerkraft oder mechanische Förderung aus dem Vergaser entfernt werden.

Bislang wird teilchenförmiger Feststoff, der bei einer Feststoffvergasung anfällt, beispielsweise als Zuschlagstoff für Zement verwertet oder durch Deponierung entsorgt.

Aufgabe der Erfindung ist eine wirtschaftliche Verwertung eines teilchenförmigen Feststoffs, der bei einer Feststoffvergasung anfällt. Zu diesem Zweck schlägt die Erfindung eine Verwendung eines teilchenförmigen Festsstoffs, der bei einer Feststoffvergasung anfällt, als Düngemittel vor. Insbesondere ist Gegenstand der Erfindung die Verwendung eines teilchenförmigen Feststoffs, der bei einer Vergasung von Klärschlamm anfällt, als Düngemittel. Klärschlamm enthält u. a. Phosphor, der Bestandteil von Düngern ist. Nach der Vergasung ist der Phosphor in dem Feststoff enthalten, der als Rückstand bei der Vergasung von Klärschlamm anfällt, weswegen sich der bei der Vergasung von Klärschlamm anfallende teilchenförmige Feststoff als Düngemittel eignet. Der Anteil an Phosphor in dem Feststoff ist höher als in handelsüblichen Düngemitteln.

Die Erfindung ist nicht auf die Vergasung von Klärschlamm beschränkt, sondern richtet sich allgemein auf die Verwendung eines teilchenförmigen Feststoffs, der bei einer Feststoffvergasung anfällt, als Düngemittel. Voraussetzung ist, dass der vergaste Feststoff mindestens einen Bestandteil eines Düngemittels enthält. Das sind außer dem bereits genannten Phosphor im wesentlichen Stickstoff und/oder Kalium und im weiteren Schwefel, Kalzium und/oder Magnesium. Die Aufzählung ist beispielhaft und nicht abschließend.

Als Düngemittel verwendbar ist sowohl ein in einem Vergaser verbleibender, teilchenförmiger Feststoff, der als Granulat, Pulver oder Schüttgut bezeichnet werden kann, als auch ein Pulver, das einen Vergaser mit dem Synthesegas verlässt. Das Pulver muss vom Synthesegas getrennt werden, das erfolgt beispielsweise in einem Zyklon-Abscheider. Der teilchenförmige, auch als Rückstand zu bezeichnende Feststoff aus dem Vergaser, verlässt den Vergaser durch Schwerkraft oder wird mechanisch aus dem Vergaser gefördert.

## Patentansprüche

1. Verwendung eines teilchenförmigen Feststoffs, der bei einer Vergasung eines Feststoffs anfällt, der mindestens einen Bestandteil eines Düngemittels enthält, als Düngemittel.

2. Verwendung nach Anspruch 1, **gekennzeichnet durch** Verwendung eines teilchenförmigen Feststoffs, der bei einer Vergasung eines Phosphor, Stickstoff und/oder Kalium enthaltenden Feststoffs anfällt, als Düngemittel.

3. Verwendung nach Anspruch 1 oder 2, **gekennzeichnet durch** Verwendung eines teilchenförmigen Feststoffs, der bei einer Vergasung von Klärschlamm anfällt, als Düngemittel.

## Geänderte Patentansprüche

### Geänderte Patentansprüche gemäss Regel 137(2) EPÜ.

**1.** Verwendung eines thermisch nicht verwertbaren teilchenförmigen Feststoffs, der bei einer Vergasung eines Feststoffs anfällt, der mindestens einen Bestandteil eines Düngemittels enthält, als Düngemittel.

**2.** Verwendung nach Anspruch 1, **gekennzeichnet durch** Verwendung eines teilchenförmigen Feststoffs, der bei einer Vergasung eines Phosphor, Stickstoff und/oder Kalium enthaltenden Feststoffs anfällt, als Düngemittel.

**3.** Verwendung nach Anspruch 1 oder 2, **gekennzeichnet durch** Verwendung eines teilchenförmigen Feststoffs, der bei einer Vergasung von Klärschlamm anfällt, als Düngemittel.

**1.** Verwendung eines thermisch nicht verwertbaren teilchenförmigen Feststoffs, der bei einer Vergasung von Klärschlamm anfällt und der mindestens einen Bestandteil eines Düngemittels enthält als Düngemittel.

**2.** Verwendung nach Anspruch 1, **gekennzeichnet durch** Verwendung eines teilchenförmigen Feststoffs, der bei einer Vergasung eines Phosphor, Stickstoff und/oder Kalium enthaltenden Feststoffs anfällt, als Düngemittel.
